# EUROPÄISCHE PATENTSCHRIFT

(11) **EP 2 251 518 B1**
(45) Veröffentlichungstag und Bekanntmachung des Hinweises auf die Patenterteilung: **12.10.2011**
(21) Anmeldenummer: 09006454.4
(22) Anmeldetag: 13.05.2009
(51) Int. Cl.: E05F 5/00, F16F 9/02, F16F 9/56

(54) **Druckfluidlineardämpfer mit Rastmechanismus**
Pressure fluid linear damper with catch mechanism
Amortisseur linéaire de fluide sous pression doté d'un mécanisme d'arrêt

(43) Veröffentlichungstag der Anmeldung: 17.11.2010
(73) Patentinhaber: Krischke-Lengersdorf, Christian, 82067 Ebenhausen (DE)
(72) Erfinder: Krischke-Lengerdorf, Christian, 82067 Ebenhausen (DE); Lengersdorf, Johannes, 82515 Wolfratshausen (DE); Eberstein, Swen, 82515 Wolfratshausen (DE)
(74) Vertreter: Szynka, Dirk

(56) Entgegenhaltungen:
- DE-U1-202005 021 321
- GB-A- 1 161 859
- US-A- 5 507 070
- US-A1- 2008 315 475

## Beschreibung

Die vorliegende Erfindung bezieht sich auf einen Druckfluidlineardämpfer zum mechanischen Dämpfen von Bewegungen von Vorrichtungsteilen. In Betracht kommen insbesondere Möbelteile wie Klappen, Schubladen oder Türen, insbesondere Schranktüren, etwa Schrankschiebetüren, und auch von Möbeln unabhängige Türen, insbesondere Schiebetüren, so etwa bei Raumteilungssystemen. Auch Kühleinrichtungen, z. B. in großen Lebensmittelgeschäften und Supermärkten, können entsprechende Türsysteme, insbesondere Schiebetürsysteme, aufweisen.

Es ist an sich längst bekannt, Bewegungen mechanisch zu dämpfen, beispielsweise die Ein- und/oder Auszugsbewegungen einer Möbelschublade oder einer Schiebetür zu dämpfen. Damit soll verhindert werden, dass eine Schublade oder Schiebetür wegen etwas zu heftiger Betätigung übermäßig schnell geöffnet oder geschlossen wird und mit Lärm und Erschütterungen verbunden an einen jeweiligen Endanschlag stößt. Solche Fehlbetätigungen können durch mangelnde Achtsamkeit, aber auch durch falsche intuitive Annahmen über den Beladungszustand der Schublade oder die Masse der Tür und damit zu große Kräfte bei der Betätigung entstehen.

Auch kann es erwünscht sein, eine schwer beladene Schublade, die wegen der Masseträgheit mit einer gewissen Kraft beschleunigt werden muss, um eine Schließoder Öffnungsbewegung zu beginnen, nicht ungedämpft bzw. ungebremst in die entgegengesetzte Position fahren zu lassen. Bei schweren Schiebetüren sind zur Beschleunigung der Tür größere Kräfte erforderlich, wobei es für den Benutzer unkomfortabel ist, die Tür vor dem Endanschlag manuell abfangen zu müssen.

Analoge Überlegungen gelten für viele andere Anwendungsfälle, beispielsweise das Öffnen und Schließen von anderen beweglichen Möbelteilen wie Türen oder Klappen, für Fensterflügel oder Zimmer- und Haustüren im Luftzug sowie für Rollläden, insbesondere für Möbel usw. Diese Bereiche sind denkbare und bevorzugte, jedoch nicht ausschließliche Anwendungsbereiche der im Folgenden erläuterten Erfindung. Beispiele für den Aufbau eines solchen Dämpfers finden sich in der WO 2006/056606.

Im Übrigen richtet sich die Erfindung auf Druckfluiddämpfer im Allgemeinen und damit zwar bevorzugt aber nicht ausschließlich auf Pneumatikdämpfer.

Der bereits zitierte Stand der Technik zeigt neben dem Aufbau des Dämpfers einen in einer Führung längs verschieblichen Aufnahmeriegel, der mit einer Kolbenstange des Dämpfers verbunden und zur Aufnahme eines Fangstifts ausgelegt ist. Der Aufnahmeriegel kann dabei in einer ausgefahrenen Position der Kolbenstange entlang der Führungsschiene in einen gegenüber dem geraden Teil der Führungsschiene etwas gekrümmten Bewegungsbahnabschnitt einfahren und dort in eine Rastposition gelangen. In dieser Rastposition hält der Aufnahmeriegel die Kolbenstange und eine dazu parallel wirkende Rückstellfeder in ausgefahrener Position und wird umgekehrt von der Rückstellfeder durch deren parallel zur Achse der Kolbenstange und des Dämpfers wirkende Rückstellkraft in der Parkposition gehalten.

Ferner wird hinsichtlich des vorbekannten Standes der Technik verwiesen auf die US 5,507,070, die einen Hydraulikzylinder für eine Schatulle zeigt. Dabei rastet ein elastischer Metallring in einer Nut in einer Innenmantelfläche des Hydraulikzylinders und in einer Nut in einer Außenmantelfläche des Kolbens ein. Ferner wird verwiesen auf die US 2008/0315475 A1 mit einer Luftfeder für Kraftfahrzeugkofferraumdeckel und einem Rastmechanismus zwischen einem äußeren Gehäuserohr und einem Pnematikzylinder sowie auf die GB 1,161,859 mit einem Hydraulikzylinder für Deckel und Türen. Dort ist ein Rastmechanismus mit einer U-förmigen Feder gezeigt.

Der Erfindung liegt das technische Problem zugrunde, einen linearen Druckfluiddämpfer mit einem Rastmechanismus zur Festlegung der Kolbenstange in einer ausgefahrenen Position anzugeben, der zuverlässig in der Funktion und einfach in der Herstellung ist.

Die Erfindung richtet sich auf einen Druckfluiddämpfer zum mechanischen Dämpfen von Bewegungen von Vorrichtungsteilen mit einer Druckfluidkammer und einer Drosselöffnung, die mit der Kammer kommuniziert, einem Kolben als bewegliche Wand der Kammer und einer Kolbenstange an dem Kolben zur Betätigung des Kolbens zwischen einer eingefahrenen Position und einer ausgefahrenen Position, in denen die Kammer jeweils unterschiedliche Kammervolumina hat, einem Rastmechanismus zur Festlegung der Kolbenstange in einer ausgefahrenen Position, wobei der Rastmechanismus über einen durch relativ zu der Kolbenstange radial wirkende Kräfte erzeugten Formschluss funktioniert, welcher Formschluss zum Einfahren der Kolbenstange in die eingefahrene Position gelöst werden muss.

Im Übrigen sind bevorzugte Ausgestaltungen in den abhängigen Ansprüchen angegeben und werden im Folgenden neben der Grundidee der Erfindung näher erläutert, wobei die einzelnen Merkmale als für alle denkbaren Anspruchskategorien offenbart gelten sollen, insbesondere in Hinblick auf den Dämpfer und seine Verwendung, Schiebetürsysteme sowie Herstellungs und Betriebsverfahren für den Dämpfer und Schiebetüren oder Schiebetürsysteme.

Die Erfindung schlägt zur Ausgestaltung eines Rastmechanismus zum Halten der Kolbenstange in einer ganz oder teilweise ausgefahrenen Position (ausgefahren heißt im Folgenden nicht zwingend "völlig ausgefahren") vor, radiale Kräfte zur Herstellung eines Formschlusses einzusetzen. Der Begriff "radial" bezieht sich dabei auf die Kolbenstange als "Achse" und bedeutet daher im Wesentlichen senkrecht zu der Kolbenstange. Durch solche radialen Kräfte lässt sich in besonders einfacher Weise ein Verrasten infolge eines Formschlusses, also eines ineinander Eingreifens von hierzu geformten Teilen, etwa konvexen und konkaven, herstellen und auch wieder lösen. Insbesondere können an der Kolbenstange selbst geeignete Formen angebracht oder in sie eingeformt sein, vorzugsweise einstückig mit der Kolbenstange, grundsätzlich aber auch als separates Element daran.

Dabei soll der Formschluss die Kolbenstange festhalten und zum Wiedereinfahren der Kolbenstange wieder gelöst werden. Hierbei ist insbesondere ein Rastmechanismus gemeint, der zum Wiedereinfahren der Kolbenstange zwingend gelöst werden muss, also nicht etwa ein Rastmechanismus zwischen der Kolbenstange und weiteren Gegenstücken (vergleiche unten), nach dessen Lösen die Kolbenstange ebenfalls eingefahren werden kann, der aber bei Annäherung der Gegenstücke an den Dämpfer während des Wiedereinfahrens der Kolbenstange auch bestehen bleiben kann.

Insbesondere kann der Formschluss relativ nah an der Druckfluidkammer vorgesehen sein, also beispielsweise an einem Durchtritt der Kolbenstange durch eine Stirnwand eines Zylinders, in dem die Druckfluidkammer enthalten ist, oder an einem kolbenstangenseitigen Ende eines solchen Zylinders und nicht unabhängig davon an einem (relativ zu der Kammer) distalen Ende der Kolbenstange in ihrer ausgefahrenen Position. In anderen Worten sollte ein relativ großer Anteil der Kolbenstangenlänge beim Aus- und Einfahren an dem Bereich des Formschlusses vorbeilaufen. Das Ausführungsbeispiel veranschaulicht eine solche Anordnung: dort ist der Formschluss an dem kolbenstangenseitigen Ende eines Hohlzylinders angebracht, der gemeinsam mit einem die Drosselöffnung aufweisenden Ventil und dem Kolben die Druckfluidkammer begrenzt. In dieser Ausgestaltung können separate Haltekonstruktionen für den Rastmechanismus vermieden werden und kann der Dämpfer in der eingefahrenen Situation der Kolbenstange relativ kompakt aufgebaut sein.

Die bereits erwähnte radiale Kraft für den Formschluss kann eine elastische Kraft sein, etwa erzeugt durch eine separate vorgesehene Feder oder, vorzugsweise, durch die Eigenelastizität eines entsprechenden Bauteils, etwa einer Rastzunge. Diese radiale elastische Kraft soll auf einen Formschluss wirken, an dem eine (relativ zu der Kolbenstange) schräge Fläche beteiligt ist. Diese schräge Fläche übersetzt die radiale Kraft in eine axiale Haltekraft, also in eine einer Verschiebung der Kolbenstange entgegenwirkende Haltekraft. Bei dieser Ausgestaltung kann allein durch eine ausreichend kräftige axiale Beaufschlagung der Kolbenstange der Formschluss gelöst werden und die Kolbenstange wieder eingefahren werden. Dies ist besonders einfach und praktisch; insbesondere sind keine eigenständigen Mechanismen zum Lösen eines Formschlusses der Rastverbindung notwendig.

Konkret sieht die Erfindung für den Formschluss das Zusammenwirken eines relativ zu der Kammer axial festliegenden Spritzgusstells aus einem Kunststoff und eines dazu passenden und von diesem Spritzgussteil zu umgreifenden Abschnitts der Kolbenstange vor. Hierbei kann also die Kolbenstange selber mit einer an der entsprechenden Stelle angepassten Form zu dem Formschluss beitragen.

Die Kolbenstange kann dabei und auch unabhängig von dieser Ausgestaltung ein Profil haben, dass zusätzlich eine gewisse Verdrehsicherung gegenüber Drehungen um ihre Achse bildet. Beispielsweise könnte die Kolbenstange ein kreuzförmiges Profil zeigen und könnte der Formschluss so ausgestaltet sein, dass er dieses Kreuzprofil gegen Verdrehen sichert.

Die Erfindung richtet sich bevorzugt auf Lineardämpfer, also solche mit einer geraden Kolbenstange und einer geraden Kolbenbewegung innerhalb einer pneumatischen Kammer, und bevorzugt nicht auf die insbesondere in Zusammenhang mit Schwenktüren ebenfalls verbreiteten Dämpfer mit gekrümmten Relativbewegungen der Dämpferteile zueinander.

Wie bereits im Fall des eingangs zitierten Standes der Technik ist der erfindungsgemäße Dämpfer vorzugsweise mit einer parallel wirkenden Federeinrichtung kombiniert. Diese kann zum Rückstellen der Kolbenstange in eine bestimmte Position vorgesehen sein, insbesondere aber dazu, das gedämpfte Vorrichtungsteil, beispielsweise die Schiebetür, während einer gedämpften Bewegungsphase in eine Endposition zu ziehen, und zwar unabhängig von einer weiteren Kraftbeaufschlagung durch den Benutzer. Beispielsweise könnte die Feder beim Öffnen einer Schiebetür auf der letzten Wegstrecke, die der gedämpften Schlussbewegung entspricht, die Schiebetür selbsttätig zuziehen, auch wenn der Benutzer die Schiebetür nicht mehr schiebt und die kinetische Energie durch den Dämpfer bereits weitgehend abgebaut worden ist.

In diesem Zusammenhang ist im Unterschied zu dem zitierten Stand der Technik eine rotationssymmetrische Anordnung der Federeinrichtung zu dem Dämpfer bevorzugt, also eine Anordnung, die keine Hebelkräfte mit quer zu der Kolbenstangenachse liegenden Hebelarmen erzeugt. Damit können die Montageteile für die Befestigung des Dämpfers und/oder die Führung der Kolbenstange und/oder die Kolbenstange selbst ohne Rücksichtnahme auf solche Hebelkräfte ausgelegt werden. Die verwendeten Federeinrichtungen, beispielsweise Schraubenfedern können nämlich insbesondere bei schwereren Vorrichtungsteilen erhebliche Kräfte entwickeln und damit infolge der Hebelkräfte bei einer nicht symmetrischen Anordnung Verstärkungen notwendig machen.

Zusätzlich oder alternativ ist die Federeinrichtung bevorzugt exzentrisch angeordnet, also nicht koaxial zur Kolbenstangenachse. Die Gesamtkonstruktion kann schlanker und hinsichtlich der Zugänglichkeit der verschiedenen Teile einfacher aufgebaut werden, wenn beispielsweise die Schraubenfeder nicht um den Dämpfer herum oder in ihm angeordnet ist, um konzentrisch zu bleiben. Stattdessen können zwei oder mehr Federn neben dem Dämpfer angeordnet werden, die insgesamt eine symmetrische Anordnung erzeugen, beispielsweise eine zweizählige oder dreizählige Rotationssymmetrie um die Achse der Kolbenstange.

Vorsorglich wird darauf hingewiesen, dass die Offenbarung der vorstehenden Ausführungen zu der parallel wirkenden Federeinrichtung auch ohne die Merkmale des Rastmechanismus zur Festlegung der Kolbenstange zu verstehen ist, was sinngemäß auch für die Offenbarung zu der Federanordnung des Ausführungsbeispiels gilt.

An einer weiteren bevorzugten Ausgestaltung der Erfindung ist zwischen dem Dämpfer und einem Vorrichtungsteil, an dem dieser befestigt ist, eine Halteplatte mit einer Rastmontageeinrichtung vorgesehen, insbesondere mit einer U-förmigen Aufnahme zum Einschnappen des Dämpfers. Das andere Dämpferende kann im Fall der U-Aufnahme durch einen ähnlichen oder anderen Formschluss gehalten sein, wobei der Dämpfer durch Einstecken oder anderweitiges Herstellen dieses Formschlusses und dann Einschnappen in die U-Aufnahme montiert werden kann. Dementsprechend bezieht sich die Erfindung auch auf Sätze aus dem Dämpfer und entsprechenden Rastmontageteilen.

Auch für diese Ausgestaltung, wieder einschließlich der entsprechenden Offenbarung des Ausführungsbeispiels, gilt, dass die Offenbarung auch von den Merkmalen des Rastmechanismus für die Festlegung der Kolbenstange unabhängig gelten soll.

Noch eine weitere bevorzugte Ausgestaltung der Erfindung betrifft einen Rastmechanismus zwischen einem distalen Kolbenstangenende und einem entsprechenden Gegenstück (worauf bereits zuvor kurz eingegangen wurde). Das Gegenstück kann im Fall einer Schiebetür beispielsweise an einem Türrahmen befestigt sein, bei einer Schublade beispielsweise am Möbelkorpus oder in beiden Fällen auch umgekehrt, also am beweglichen Teil, wenn der Dämpfer jeweils am festen Teil befestigt ist. Dieser Rastmechanismus dient zum lösbaren Verbinden und wieder Trennen zwischen der Kolbenstange, also dem Dämpfer, um dem Gegenstück. Durch die Verbindung wird der Dämpfer bei der Entfernung zwischen Gegenstück und Dämpfer ausgezogen, also die Kolbenstange in die ausgefahrene Position gebracht - in Einzelfällen auch umgekehrt eingefahren - jedenfalls eine Bewegung erzwungen, die bei der Wiederannäherung umgekehrt erfolgt. Vorzugsweise tritt die Dämpferwirkung vor allem bei der Wiederannäherung ein; dies kann aber auch genau umgekehrt gelöst sein, sodass der Dämpfer beim Entfernen dämpft. Er kann schließlich auch in beiden Richtungen dämpfend wirken.

Dieser Rastmechanismus ist bei dem Ausführungsbeispiel abgesehen von der abweichenden Anordnung analog zu dem bereits erläuterten Rastmechanismus zwischen der Kolbenstange und dem Dämpfer selbst ausgestaltet, sodass die vorstehenden Ausführungen zu den bevorzugten Merkmalen des Letztgenannten hier analog gelten.

Im Übrigen gilt auch hier, dass die Merkmale dieses Rastmechanismus unabhängig von den übrigen Merkmalen in dieser Beschreibung offenbart sein sollen.

Weitere Einzelheiten der Erfindung richten sich auf eine Ventileinrichtung des erfindungsgemäßen Druckfluiddämpfers, die ein elastisch aufgehängtes Ventilteil aufweist, mit dessen Hilfe eine von ihm begrenzte Drosselöffnung mit zunehmendem Druck zwischen den Seiten der Ventileinrichtung, also innerhalb und außerhalb der Kammer vergrößert wird. Hierbei richtet sich die Erfindung (und auch unabhängig von dieser Ventileinrichtung) vorzugsweise auf einen pneumatischen Dämpfer. Im Folgenden wird hiervon nur der Vereinfachung halber ausgegangen.

In einer der Wände der pneumatischen Kammer ist also eine Drosselöffnung zur Drosselung einer Gasbewegung in die oder aus der Kammer angebracht. Diese Drosselöffnung ist in der erwähnten Ventileinrichtung vorgesehen und wird abhängig von dem erwähnten Druckunterschied verändert. Dabei soll ein elastisch aufgehängtes Ventilteil die Drosselöffnung zumindest teilweise begrenzen und der erwähnte Druckunterschied zusammenwirkend mit der elastischen Aufhängung für eine entsprechende Auslenkung des Ventilteils und daraus resultierende Vergrößerung oder Verkleinerung der effektiven Drosselöffnungsfläche sorgen.

Wenn man sich zur Veranschaulichung eine schnelle Öffnungs- oder Schließbewegung einer Schublade vorstellt, so wird diese auf eine Relativbewegung zwischen dem Dämpfer und der beweglichen Wand der pneumatischen Kammer übertragen und führt zu einer entsprechenden Druckdifferenz über die Ventileinrichtung. Dabei kann in der pneumatischen Kammer ein Unterdruck oder auch ein Überdruck erzeugt werden. Dieser erzeugte Druck soll zumindest zu einem wesentlichen Teil durch die Ventileinrichtung ausgeglichen werden, die pneumatische Kammer soll also im Übrigen näherungsweise dicht sein, wobei gewisse Restundichtigkeiten, wie im Folgenden noch erläutert, durchaus auch erwünscht sein können.

Eine schnelle Bewegung erzeugt nach einer gewissen Bewegungsstrecke eine relativ große Druckveränderung und damit eine große Druckdifferenz, erfindungsgemäß also eine vergrößerte Drosselöffnungsfläche. Der Strömungswiderstand gegenüber dem durch die Drosselöffnung strömenden Gas sinkt somit. Mit der Erfindung kann also erreicht werden, dass der Dämpfer sich heftigen Bewegungen weniger im Sinne einer Quasi-Blockade widersetzt, als dies von konventionellen Dämpfern bekannt ist. Andererseits ist die Drosselöffnungsfläche bei kleineren Druckdifferenzen, etwa sehr sachten Bewegungen, entsprechend kleiner, sodass auch solche Bewegungen noch in einem gewissen Umfang gedämpft werden.

Es kann sogar vorgesehen sein, dass sich die Ventileinrichtung erst ab einer gewissen Druckdifferenz öffnet, sodass eine gewisse Mindestdämpfungskraft gewährleistet bleibt. Andererseits können beabsichtigte Undichtigkeiten der pneumatischen Kammer dazu führen, dass sehr sanfte Bewegungen infolge einer Gasströmung durch die Undichtigkeit ganz leicht und fast ungedämpft ablaufen, was ebenfalls erwünscht sein kann. Diese Undichtigkeiten können sowohl in der Konstruktion der Ventileinrichtung als auch an anderer Stelle, etwa bei der Abdichtung der beweglichen Wand, vorliegen.

Näherungsweise kann ein relativ großer Anstieg der Drosselöffnungsfläche bei steigendem Druckunterschied zu einem regelventilähnlichen Verhalten führen, also zu einer näherungsweisen Beibehaltung eines bestimmten Druckunterschieds und damit einer bestimmten Dämpfungskraft.

Bei einer bevorzugten Ausgestaltung soll der erfindungsgemäße Dämpfer mit Umgebungsluft arbeiten, also kein gesondert vorgesehenes Pneumatikgas enthalten. Insbesondere kann die Pneumatikkammer auch über die Ventileinrichtung direkt mit der Umgebung kommunizieren.

Die Ventileinrichtung verfügt über eine elastische Aufhängung des Ventilteils, beispielsweise eines die Drosselöffnung im nicht ausgelehnten Zustand fast oder ganz verschließenden Stöpsels. Die elastische Aufhängung kann in konventioneller Weise in Form von Metallfedem, etwa Schraubenfedern, vorgesehen sein. Bevorzugt ist jedoch eine elastische Aufhängung durch ein Elastomer, wobei besonders bevorzugt ist, dass das aufgehängte Ventilteil und die elastische Aufhängung einstückig aus Elastomer gebildet sind. Beispielsweise kann das Ventilteil ein im Wesentlichen zylindrischer Stöpsel, auch mit konischer Ventilfläche, sein, der an seitlichen Stegen aus dem gleichen Elastomermaterial aufgehängt ist. Diese Stege können in verschiedener Form außerhalb gehalten sein, beispielsweise in entsprechenden Aufnahmen eingeklemmt sein. Besonders bevorzugt ist allerdings, dass auch eine an die Stege anschließende und das Ventilteil und die Stege geschlossen umgebende Halterung einstückig mit Ventilteil und Stegen oder anderweitiger Aufhängung ausgebildet ist. "Geschlossen" meint hierbei natürlich nicht die Richtungen, in denen die Ventileinrichtung gasdurchlässig sein muss, sondern bedeutet, dass die Halterung einen zu den im Verhältnis dazu seitlichen Richtungen im Wesentlichen geschlossenen Rahmen bildet. Insbesondere kann die Halterung in dieser einstückigen Form als elastischer Stöpsel in dem Dämpfer gehalten, etwa eingeklemmt und optional auch verrastet sein. Eine Veranschaulichung bietet das Ausführungsbeispiel.

Um Missverständnisse zu vermeiden, ist darauf hinzuweisen, dass die einstückige Ausbildung nicht notwendigerweise die gesamte Ventileinrichtung betrifft, also beispielsweise in dem Ausführungsbeispiel zwar die Halterung, die elastische Aufhängung und zwei Ventilteile einstückig aus Elastomer gebildet sind, jedoch nicht die von den Ventilteilen und deren konischen Ventilflächen zu verschließenden Öffnungen und die Wand, in denen sich diese befinden. Diese können vielmehr einstückig mit einem anderen Teil des Dämpfers ausgebildet sein.

Die Ventileinrichtung kann vorzugsweise in einer dem Zylinderkolben gegenüberliegenden Wand vorgesehen sein. Im Vergleich zu den Ausführungsbeispielen ist darauf hinzuweisen, dass diese Wand auch die Wand sein kann, durch die die Kolbenstange läuft. Im Übrigen könnte die Ventileinrichtung auch durchaus in dem Kolben selbst ausgebildet sein und zwischen zwei von dem Kolben und der Ventileinrichtung getrennten Pneumatikkammem vorliegen.

Die erwähnten Elastomerteile, ob es sich dabei um die Aufhängung alleine oder die einstückige Integration mit den anderen erwähnten Teilen handelt, werden vorzugsweise durch ein Spritzgussverfahren hergestellt. Dabei sind allerdings auch Vakuumverfahren und Druckgussverfahren bevorzugt. Besonders günstige Werkstoffe sind thermoplastische Elastomere und Elastomerverbundstoffe sowie Kautschuke, Silikone und thermoplastische Urethane.

Bislang wurde davon ausgegangen, dass der Dämpfer zwei Bewegungsrichtungen kennt und in einer der beiden oder in beiden Richtungen dämpft. Besonders bevorzugt sind Ausführungsformen, bei denen die Dämpfungswirkung vorwiegend in einer Richtung auftritt und die andere Bewegungsrichtung vergleichsweise weniger oder ungedämpft bleibt. Ein gewisses Mindestmaß an Dämpfung wird zwar in dieser zweiten Richtung jedenfalls dann, wenn der Dämpfer an der entsprechenden Bewegung direkt teilnimmt, durch die Ausgleichsluftbewegungen notwendig sein. Dieses Maß kann jedoch durch die Bemessung der entsprechenden Strömungswege relativ klein gehalten werden.

Neben den bereits erwähnten bevorzugten Türen, Klappen und Schubladen in Möbeln und Häusern können sinnvolle Anwendungen für die Erfindung auch in ganz anderen Gebieten, etwa bei beweglichen Teilen in Automobilen, insbesondere bei Klappen und Türen, in Luftführungssystemen, bei Toilettenbrillen oder -deckeln (zur Verhinderung des lauten Auf- oder Zuschlagens) oder in anderen Bereichen liegen.

Die Erfindung bezieht sich ganz besonders aber auf Schiebetürsysteme, also Türsysteme, bei denen das Türelement oder Türblatt translatorisch verschoben wird, um die Türöffnung zu verschließen oder freizugeben.

Schiebetürsysteme finden Anwendung im Möbelbau, bei Zimmer- oder Haustüren, bei Raumteilern, auch zur Abgrenzung von begehbaren Schränken, Kühlgeräten oder -räumen, aber auch bei größeren Hallentoren, Garagentoren u.Ä. Je nach Anwendung sind die zu bewegenden Schiebetürelemente unterschiedlich schwer.

Es ist vorteilhaft, Teile der Schiebebewegung eines Schiebetürelements durch einen Dämpfer abzudämpfen. Dies betrifft insbesondere die Schiebetürbewegung in der Umgebung der Grenzen der Bewegungsstrecke, d. h. der Anschläge. Hier soll vermieden werden, dass Schiebetürelemente, vor allem schwere Schiebetürelemente, in Folge ihrer Bewegung per Hand oder auch durch einen technischen Antrieb und ihrer dadurch vorhandenen kinetischen Energie anschlagen oder zu stark abgebremst werden. Ein ungedämpftes Anschlagen kann zu unangenehmen Geräuschen und auch mechanischen Belastungen führen, wohingegen eine gedämpfte Bewegung geräuschärmer und mechanisch schonender erfolgen kann und bei dem Benutzer den Eindruck einer hochwertigeren Ausführung hervorruft.

Schiebetürsysteme unterliegen in vielen Fällen auch Ansprüchen an die ästhetische Gestaltung, die mit zu berücksichtigen sind.

Die Erfindung richtet sich somit auch auf ein Schiebetürsystem mit einem Schiebetürelement, das in einer Schieberichtung verschoben werden kann und eine schieberichtungsparallele Seitenkante aufweist, einer Schiene zum Halten des Schiebetürelements, die zumindest einen Raum oberhalb der Seitenkante mit einem Schienenschenkel umfasst und dadurch zumindest in einer zu dem Schiebetürelement senkrechten Blickrichtung abdeckt und gegenüber der das Schiebetürelement verschoben werden kann, und einem Dämpfer zum Abdämpfen zumindest eines Teils von Verschiebebewegungen des Schiebetürelements gegenüber der Schiene, der einerseits an der Schiene und andererseits an dem Schiebetürelement angebracht ist, wobei der Dämpfer so innerhalb der Schiene angebracht ist, dass er durch die Schiene in der auf dem Schiebetürelement senkrechten Blickrichtung abgedeckt ist

Die Grundidee der Erfindung besteht darin, dass bei den allermeisten gängigen Schiebetürsystemen ohnehin Schienen vorgesehen sind, die das Schiebetürelement nicht nur halten, sondern auch mit einem Schienenschenkel zumindest einen Raum oberhalb der entsprechenden Seitenkante des Schiebetürelements umfassen und abdecken. Hierbei ist die Blickrichtung auf das Schiebetürelement, also senkrecht in Bezug auf seine flächige Erstreckung, gemeint. "halten" bedeutet hier nicht notwendigerweise, dass die Schiene das gesamte Gewicht oder überhaupt nur das Gewicht des Schiebetürelements trägt, sondern bezieht sich auch auf solche Fälle, in denen die Schiene beispielsweise nur gegen ungewünschte seitliche Bewegungen, also gewissermaßen in der erwähnten Blickrichtung, vorgesehen ist und insoweit das Schiebetürelement in der Bahn hält.

Die Schiene kann mit ihrem Schenkel die Seitenkante selbst umfassen und abdecken oder auch, in horizontaler Blickrichtung gesehen, im Wesentlichen an die Seitenkante anschließen. Dann deckt sie einen Raum oberhalb der Seitenkante ab, der für Montagelement u.Ä. Verwendung findet und daher vor Blicken geschützt werden soll. Natürlich kann es dabei einen kleinen Schlitz geben, sodass der Begriff des Abdeckens nur im Sinne eines im Wesentlichen Abdecken zu verstehen ist.

Wenn nun diese Schiene auch dazu ausgenutzt wird, den Dämpfer selbst abzudecken, indem der Dämpfer innerhalb der Schiene angeordnet wird, so sind die sonst am Markt zu beobachtenden Verschlechterungen des äußeren Erscheinungsbildes durch Dämpferkonstruktionen vermeidbar. Dazu muss die Schiene allenfalls etwas größere Abmessungen aufweisen als sonst notwendig. Es hat sich aber sogar herausgestellt, dass im Rahmen bevorzugter Ausgestaltungen dieser Erfindung schlanke Bauformen des Dämpfers möglich sind, insbesondere die Linearzylinder, die ohne Weiteres auch in bestehenden Standardschienensystemen verbaut werden können.

Demgegenüber kann bei der Erfindung der Dämpfer in einer durch die Schiene selbst allenfalls im Sinne des zur Verfügung stehenden Volumens (bzw. der Baubreite und -höhe) beschränkten Weise montiert und mit der Schiene und dem Schiebetürelement verbunden werden. Wenn gewünscht, können aufwändige Gehäusekonstruktionen, die in anderen Fällen schon aus ästhetischen Gründen, wegen des sonst nicht gegebenen Berührschutzes oder aus anderen Gründen erforderlich sein können, weggelassen werden.

Bevorzugt ist der Dämpfer zwischen der Schiene und dem Schiebetürelement montiert. Dies ist allerdings nicht unbedingt notwendig. Denkt man sich beispielsweise ein umgekehrtes L-Profil, das mit einem Schenkel horizontal an einer Zimmerdecke montiert ist und mit dem anderen vertikalen Schenkel in der beschriebenen Weise zumindest den Raum über der Seitenkante abdeckt, und denkt man sich ferner dieses L-Profil vor einer Wand, also in einer Ecke, montiert, so könnte der Dämpfer auch durchaus zwischen dem Schiebetürelement und der Zimmerwand angebracht sein. Erfindungsgemäß bevorzugt sind jedoch Lösungen, die unabhängig von solchen Montagesituationen für eine Sichtabdeckung sorgen und damit den Dämpfer zwischen Schiene und Schiebetürelement vorsehen. In Betracht kommen bei der beschriebenen L-Profilform damit der Zwischenraum zwischen dem horizontalen Schenkel des "L" und dem Schiebetürelement, also gewissermaßen eine Montage des Dämpfers "über" dem Schiebetürelement, und der Zwischenraum zwischen dem vertikalen Schenkel der Schiene und dem Schiebetürelement, also gewissermaßen eine Montage "vor" dem Schiebetürelement. Bevorzugt ist, auch bei anderen Profilformen, eine Montage "über" dem Schiebetürelement, also zwischen einem horizontalen Schenkel der Schiene bzw. ihrer oberen Wand, und dem Schiebetürelement. Bevorzugt sind ferner Schienen in einer umgekehrten U-Form, die also gegenüber der beschriebenen L-Form einen weiteren vertikalen Schenkel aufweisen.

Die Schiene kann Lager zur Lagerung des Schiebetürelements in der verschiebbaren Weise in der Schiene aufweisen, etwa Systeme mit Führungsrollen und Laufflächen für diese. Dies gilt sowohl für den bereits erwähnten Fall, dass das Halten durch die Schiene lediglich einem seitlichen Führen in einer Bahn entspricht, als auch für den Fall einer Abstützung eines Teils des oder des gesamten Gewichts des Schiebetürelements.

Es ist ferner bevorzugt, dass der Dämpfer bei einer erfindungsgemäßen Lösung bei einer oberen Schiene angebracht ist, wenngleich Schiebetürsysteme meistens zusätzlich auch untere Schienen im Bodenbereich aufweisen. Bei den unteren Schienen sind eine minimale Baugröße und daher häufig kein zusätzlicher mechanischer Aufwand gewünscht Ferner sind sie selbst dann Blicken von oben besonders gut zugänglich, wenn eine Sichtabdeckung in der (horizontalen) Richtung senkrecht zur Schiebetürelementebene besteht.

Bevorzugt ist im Rahmen der Erfindung schließlich eine Anwendung im Bereich von Schiebetürsystemen mit besonders schweren Schiebetürelementen, wie sie bei Raumteilern, Abteilungen von begehbaren Schränken, Toren und Zimmer- und Haustüren auftreten, also außerhalb der eigentlichen Möbel. Sie richtet sich demnach bevorzugt auf Schiebetürsysteme, die an Zimmer- oder Hauswänden montiert sind.

Im Folgenden wird die Erfindung anhand eines Ausführungsbeispiels erläutert, wobei die offenbarten Einzelmerkmale auch in anderen Kombinationen erfindungswesentlich sein können und sich implizit, wie bereits erwähnt, sowohl auf die Vorrichtungskategorie als auch auf die Verwendungskategorie der Erfindung beziehen.
- Figur 1: zeigt eine Längsschnittdarstellung eines Lineardämpfers.
- Figur 2: zeigt eine perspektivische Explosionsdarstellung des Lineardämpfers aus Figur 1.
- Figur 3: zeigt verschiedenen Seitenansichten, perspektivische Ansichten und eine Draufsicht auf ein Elastomerteil einer Ventileinrichtung des Lineardämpfers aus dem Figuren 1 und 2.
- Figur 4: zeigt den Lineardämpfer aus den Figuren 1 und 2 in vier verschiedenen Positionen zur Veranschaulichung seiner Funktionsweise.
- Figur 5: zeigt einen Dämpfer analog zu den Figuren 1 - 4 in zwei verschiedenen räumlichen Zuständen und mit Ausschnitt- darstellungen, zur Erleichterung des Verständnis der folgenden Figuren.
- Figur 6: ergänzt die Darstellung aus Figur 5.
- Figur 7: zeigt eine Variante zu den Figuren 5 und 6, die die Erfindung darstellt.
- Figur 8: zeigt eine erfindungsgemäße Montage des Dämpfers aus Figur 7.
- Figur 9: zeigt einen Teil eines Schiebetürelements mit einem gemäß Figur 8 mon- tierten Dämpfer, und zwar in zwei verschiedenen Montagepositionen.

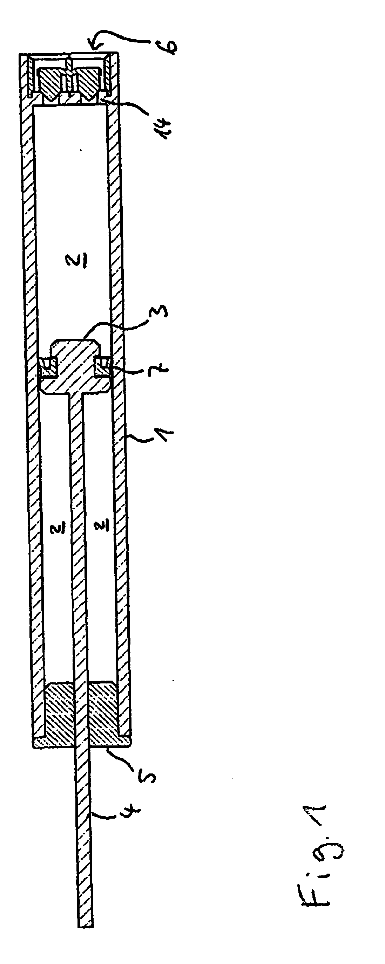

Figur 1 zeigt einen Lineardämpfer zur Erläuterung der Erfindung in Längsschnittdarstellung. Dieser wird anhand der Figuren 1 - 4 zunächst näher beschrieben, um das Verständnis der Erfindung insgesamt zu erleichtern. Es handelt sich dabei um einen Pneumatikzylinder 1, der eine pneumatische Kammer 2 umschließt. In dieser pneumatischen Kammer 2 ist ein Pneumatikkolben 3 mit einer Kolbenstange 4 geführt. Der Pneumatikzylinder ist an seinem in Figur 1 linken Ende mit einem die Kolbenstange 4 führenden Stopfen 5 verschlossen und an seinem in Figur 1 rechten Ende mit einer im weiteren Verlauf noch näher beschriebenen Ventileinrichtung 6 ausgestattet. Der Kolben 3 ist gegenüber der Innenmantelwand des Zylinders 1 mit einer im Wesentlichen ringförmigen Dichtung mit im Wesentlichen U-förmigem Querschnittsprofil abgedichtet, die mit 7 beziffert ist. Der radial äußere Schenkel des U-Querschnittsprofils bildet dabei eine etwas nach außen abgestellte und damit an der Innenmantelwand des Zylinders 1 anliegende Dichtlippe.

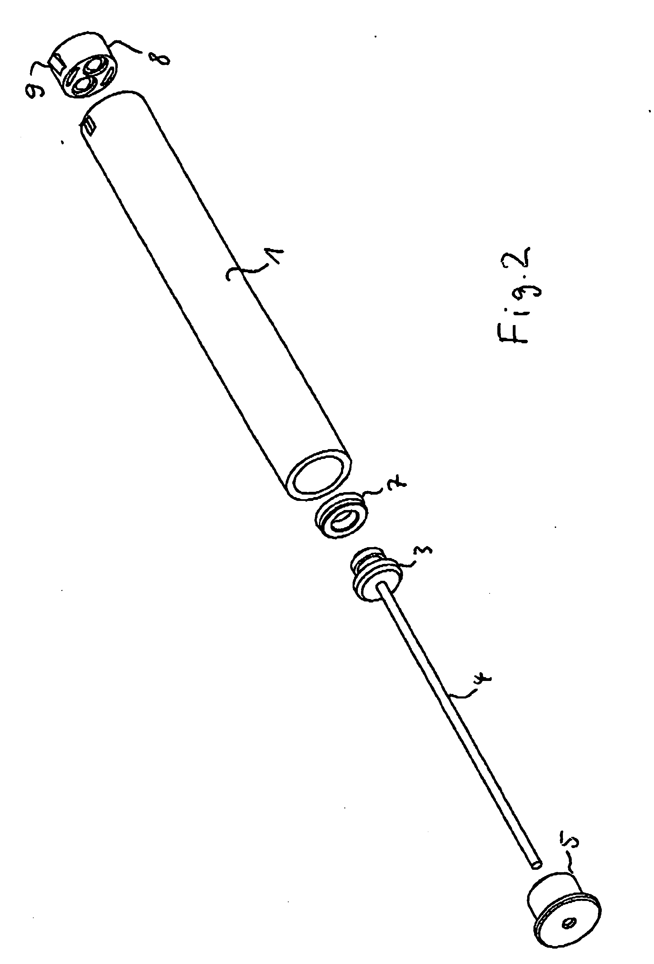

Figur 2 zeigt die anhand Figur 1 erläuterten Teile in einer explosionsartigen Darstellung. Zusätzlich zu Figur 1 erkennt man hier, dass die Ventileinrichtung 6 ein in Figur 1 stöpselartig in das Ende des im Wesentlichen rohrförmigen Pneumatikzylinders 1 klemmend eingesetztes Elastomerteil 8 aufweist und dass dieses Elastomerteil 8 eine in Figur 2 nach oben weisende Rastnase 9 zum Eingriff in eine entsprechende Ausnehmung an dem Pneumatikzylinder 1 trägt.

Im Übrigen verdeutlicht Figur 2, dass der Lineardämpfer aus Figur 1 durch Aufsetzen des Dichtrings 7 auf den Kolben 3, Einführen des Kolbens 3 mit Hilfe der Kolbenstange 4 in den Zylinder 1, Aufsetzen des Stopfens 5 auf die Kolbenstange 4 und Einsetzen des Stopfens 5 in das offene Ende des Zylinders 1 sowie das erwähnte Einsetzen des Elastomerteils 8 der Ventileinrichtung 6 zusammengebaut werden kann.

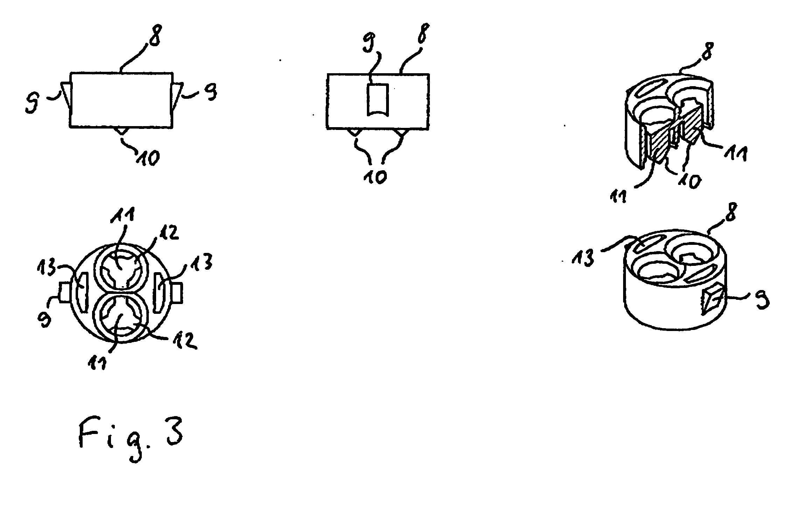

Figur 3 zeigt das Elastomerteil 8 aus Figur 2, das auch in Figur 1 durch die abweichende Schraffur zu erkennen ist, in Einzelheiten. Oben links und in der Mitte sind zwei seitliche Ansichten mit in Figur 3 vertikal liegender Zylinderachse zu sehen, die zueinander um 90° verdreht sind. Dabei zeigen sich zwei Rastnasen 9 gemäß Figur 2. Im Übrigen hat das Elastomerteil eine im Wesentlichen zylinderförmige einhüllende Form, die auch in den übrigen Darstellungen zu erkennen ist. Die im unteren Bereich erkennbaren Spitzen sind, wie die rechts oben dargestellte perspektivische Schnittansicht zeigt, nach unten weisende konische Ventilflächen 10 und Abschlussflächen von im Übrigen im Wesentlichen zylindrischen Stöpseln 11, die in dem Elastomerteil 8 vorgesehen und gehalten sind. Die zylindrischen Stöpsel 11 sind, wie sich auch anhand der links unten dargestellten Draufsicht und der nicht geschnittenen perspektivischen Ansicht rechts unten zeigt, paarweise jeweils in einem zylindrischen Loch in dem Elastomerteil 8 vorgesehen und an drei unter 120° zueinander liegenden Elastomerbrücken 12 einstückig als Bestandteil des Elastomerteils 8 ausgebildet. Sie halten, von den nur in ihrem oberen Bereich vorgesehenen Brücken 12 abgesehen, einen radialen Abstand von den Innenbegrenzungsflächen der Löcher und geben damit einen gewissen Strömungsquerschnitt in der Zylinderachse des Lineardämpfers frei. Im Übrigen sind die Löcher im oberen Bereich angefast und weisen am unteren Ende stattdessen eine gestufte Form auf, mit der sie sich, wie Figur 1 zeigt, in justierender Weise an entsprechende Kanten in einer passenden Zwischenwand 14 des Zylinderrohrs 1 einfügen.

Zum Einsetzen in das Zylinderrohr 1 sind die bereits erwähnten Rastnasen 9 vorgesehen, die infolge in Figur 3 ebenfalls dargestellter Schlitze 13 gegen einen nicht allzu großen Widerstand nach innen verpresst werden können. Damit sind die Schlitze 13 nach Einsetzen des Elastomerteils 8 in das Zylinderrohr 1 im Wesentlichen dicht.

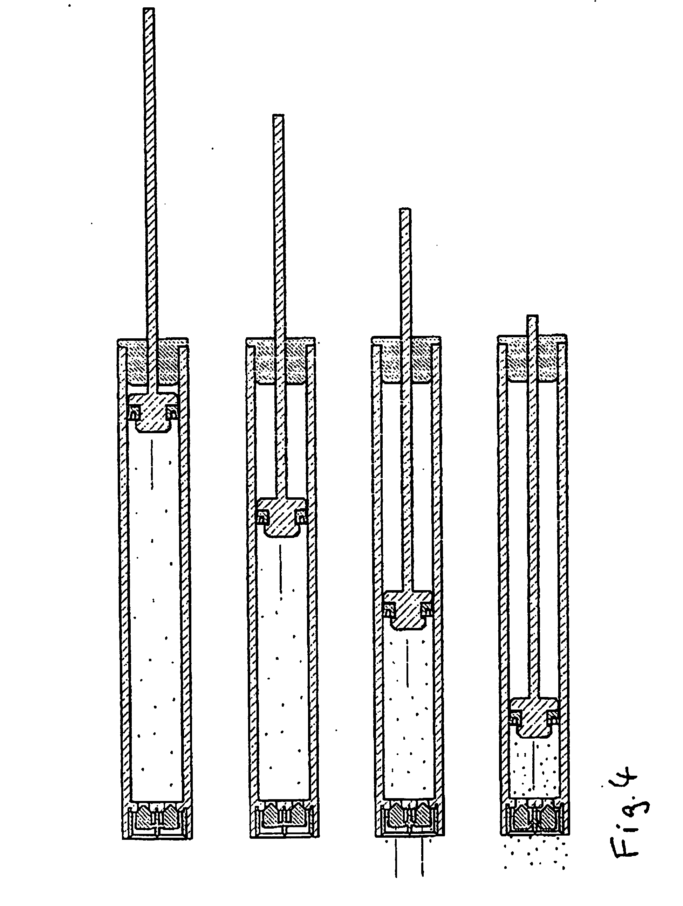

Figur 4 zeigt den Lineardämpfer im zusammengebauten Zustand entsprechend Figur 1, aber um 180° gedreht, in vier verschiedenen Arbeitspositionen. Figur 4 trägt der Klarheit der Darstellung halber keine Bezugsziffern. Es wird auf die Erläuterungen zu den Figuren 1 bis 3 und die entsprechenden zeichnerischen Übereinstimmungen verwiesen.

In Figur 4 ist die Kolbenstange 4 in der oberen Darstellung ganz ausgezogen und in der unteren Darstellung fast ganz eingeschoben, sodass der Kolben 3 dementsprechend unterschiedliche Positionen innerhalb der pneumatischen Kammer 2 einnimmt. Da der Kolben 3 mit Hilfe der Ringdichtung 7 zwei Teile der pneumatischen Kammer voneinander abgrenzt, wird in dem in Figur 4 linken (und in Figur 1 rechten) Teil der pneumatischen Kammer 2 Umgebungsluft komprimiert. Dies soll durch die von oben nach unten zunehmende Dichte die Luft symbolisierender Punkte dargestellt sein. Die in Figur 4 rechte Kammer entwickelt dabei keinen wesentlichen Unterdruck, weil die Durchführung der Kolbenstange 4 durch den Stopfen 5 entsprechend undicht ist. Im umgekehrten Fall, also bei einem Ausziehen der Kolbenstange 4, dichtet die Ventileinrichtung 6 mit Ausnahme der Restundichtigkeiten der Schlitze 13 relativ gut ab. In diesem Fall sorgt die U-Profilform der Dichtung 7 für einen Druckausgleich zwischen den beiden Teilen der pneumatischen Kammer 2.

Die bereits erwähnten konischen Dichtflächen 10 der zylindrischen Stöpsel 11 des Elastomerteils 8 aus Figur 3 liegen nach Einsetzen des Elastomerteils 8 in das in Figur 4 linke Ende des Zylinderrohres 1 an den Rändern von dazu passenden Bohrungen in der bereits erwähnten Zwischenwand 14 des Zylinderrohres 1 an und sind durch ein gewisses Übermaß mit einer leichten Anpresskraft infolge der elastischen Brücken 12 daran gehalten, werden also in anderen Worten durch diese Anlage etwas nach links ausgelenkt. Infolge dieser elastischen Spannung dichten die konischen Dichtflächen 10 mit den Bohrungen solange ab, bis der durch die Verschiebung des Kolbens 3 in dem linken Teil der pneumatischen Kammer 2 erzeugte Druck eine ausreichend große Kraft aufgebaut hat, um die Stöpsel 11 weiter axial auszulenken. Dies soll in Figur 4 in der von oben gerechnet dritten Abbildung der Fall sein. In der vierten Abbildung sind die Stöpsel ausgelenkt und geben dementsprechend zwischen den Bohrungen und den konischen Dichtflächen einen Querschnitt, nämlich eine Drosselöffnungsfläche, frei. In der unteren Darstellung in Figur 4 kann also die komprimierte Luft durch die Ventileinrichtung 6 nach außen entweichen. In den oberen drei Darstellungen wird dieser Druck erst aufgebaut. Die freigegebene Drosselöffnungsfläche ist infolge der elastischen Eigenschaften der Aufhängung durch die Brücken 12 druckabhängig größer oder kleiner.

Damit zeigt der Lineardämpfer die bereits beschriebenen Eigenschaften des Aufbaus einer gewissen Gegenkraft und der Vergrößerung der Drosselöffnungsfläche ab Erreichen dieser Gegenkraft, d. h. ab Erreichen eines bestimmten Drucks. Im Übrigen wird auf die Erläuterung in der oben stehenden Beschreibung der Erfindung verwiesen.

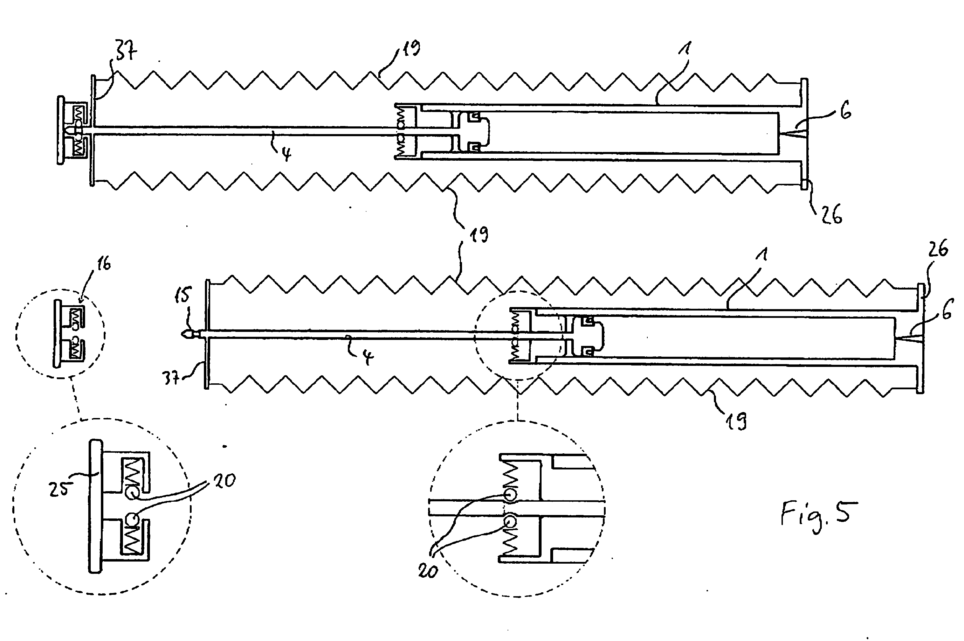

Figur 5 zeigt den Dämpfer aus den Figuren 1 - 4 in weiter, aber nicht erfindungsgemäß ausgestalteter Form. Dabei ist die Ventileinrichtung 6 aus Figur 3 vereinfacht dargestellt. Die beiden großen Darstellungen in Figur 5 unterscheiden sich dadurch, dass ein in Bezug auf den Pneumatikzylinder 1 distales Ende der Kolbenstange 4, das in der unteren Darstellung mit 15 bezeichnet ist, in der oberen Darstellung in ein passendes Gegenstück 16 eingerastet ist, in der unteren Darstellung aber daraus entfernt ist. Der Rastmechanismus zwischen dem Kolbenstangenende 15 und dem Gegenstück 16 wird im Folgenden noch näher erläutert. Er ist in Figur 5 unten in den Ausschnittsdarstellungen vergrößert gezeichnet.

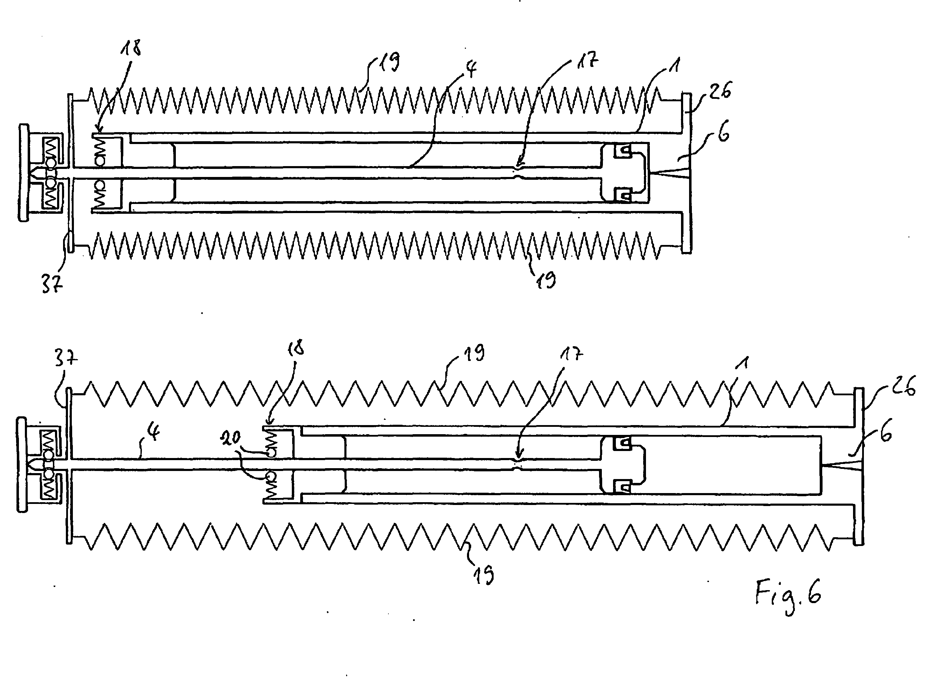

Ein weiterer Rastmechanismus ist vorgesehen zwischen einem in Bezug auf den Pneumatikzylinder 1 proximalen Bereich der Kolbenstange 4 und dem Ende des Pneumatikzylinders, aus dem die Kolbenstange 4 ausfährt. Dies ist insbesondere auch in Figur 6 näher dargestellt, wobei der proximale Kolbenstangenbereich dort mit 17 bezeichnet ist und das entsprechende Gegenstück am Pneumatikzylinderende mit 18. Auch auf diesen Rastmechanismus wird noch näher eingegangen.

Ferner zeigen die Figuren 5 und 6 zwei symbolisch dargestellte Schraubenfedern 19, die parallel zu dem Pneumatikzylinder 1 und der Kolbenstange 4 angeordnet sind, und zwar in der gezeichneten Ansicht mit ihren jeweiligen Mittenachsen über und unter einer Zylindersymmetrieachse des Pneumatikzylinders 1 und der Kolbenstange 4. Räumlich betrachtet sind die beiden Schraubenfedem 19 also unter 180° versetzt symmetrisch und exzentrisch zu dem Pneumatikzylinder 1 und der Kolbenstange 4 vorgesehen. Es handelt sich um eine zweizählige Rotationssymmetrie und gleichzeitig eine Spiegelsymmetrie zu einer Ebene senkrecht auf der Zeichnungsebene und durch die Zylindersymmetrieachse des Dämpfers und zur Zeichnungsebene selbst.

Bevor das Zusammenspiel der in den Figuren 5 und 6 zusätzlich zu den Figuren 1 - 4 dargestellten Komponenten erläutert wird, soll zunächst der genauere Aufbau der beiden erwähnten Rastmechanismen 15, 16 und 17, 18 dargestellt werden. Beide sind weitgehend identisch. Die Kolbenstange 4 weist jeweils eine radiale Verjüngung auf, die im Fall des Distalendes 15 mit einer Anspitzung verbunden ist. Die Gegenstücke 16 und 18 weisen in diesem Fall vier schraubenfederbeaufschlagte Kugeln 20 auf, von denen jeweils zwei dargestellt sind und die übrigen beiden (im Sinn einer vierzähligen Symmetrie) über bzw. unter der Zeichenebene liegen und senkrecht zu ihr beweglich sind. Die Kugeln 20 sind dabei geführt, was hinsichtlich des Gegenstücks 16 nur symbolisch und hinsichtlich des Gegenstücks 18 gar nicht dargestellt ist, im Einzelfall aber leicht im Bereich des fachmännischen Könnens liegt. Sie sind also jeweils eindimensional beweglich und dabei radial auf die Kolbenstange 4 zu kraftbeaufschlagt. Dadurch rasten sie in den Verjüngungen der Kolbenstangenbereiche 15 und 17 ein, sodass sich zwischen den Kugeln und den Verjüngungen ein Formschluss ergibt, wie er beispielsweise in Figur 5 unten in der Mitte und in Figur 6 jeweils links dargestellt ist. Dieser Formschluss wird durch die radialen Federkräfte aufrechterhalten und erzeugt durch die Anlage von zu der Kolbenstangenrichtung schrägen Kugelflächenanteilen der Kugeln 20 und entsprechend den komplementären Flächenanteilen der Verjüngungen axiale Haltekräfte. Man kann sich leicht vorstellen, dass eine axiale Kraftbeaufschlagung über einer bestimmten Schwelle durch einen Kraftschluss zwischen diesen Schrägflächen eine entsprechende radiale Gegenkraft gegen die Kraft der Schraubenfedern aufbringt und den Formschluss und damit die Verrastung lösen kann.

Dabei sind zwei Varianten denkbar. Zum einen kann die Verjüngung wie im Fall des distalen Kolbenstangenendes 15 rotationssymmetrisch sein, sodass der Rasteingriff bzgl. Relativdrehungen zwischen dem Gegenstück 16 und dem übrigen Lineardämpfer um die Zylindersymmetrieachse "symmetrisch" funktioniert, also in allen Winkelpositionen gleich funktioniert. Andererseits kann die Verjüngung jeweils der gewünschten Eingriffsrichtung einer Kugel 20 entsprechen, wie im Bereich 17 der Kolbenstange 4. Die Figur zeigt hier einen Schnitt, der in einer Ebene senkrecht zur Zeichnungsebene und durch die Zylindersymmetrieachse analog aussehen würde, unter 45° zwischen den beiden erwähnten Schnittebenen allerdings nicht Die Kugeln haben also Vorzugspositionen, sodass sich durch den Rastmechanismus eine Verdrehsicherung ergibt.

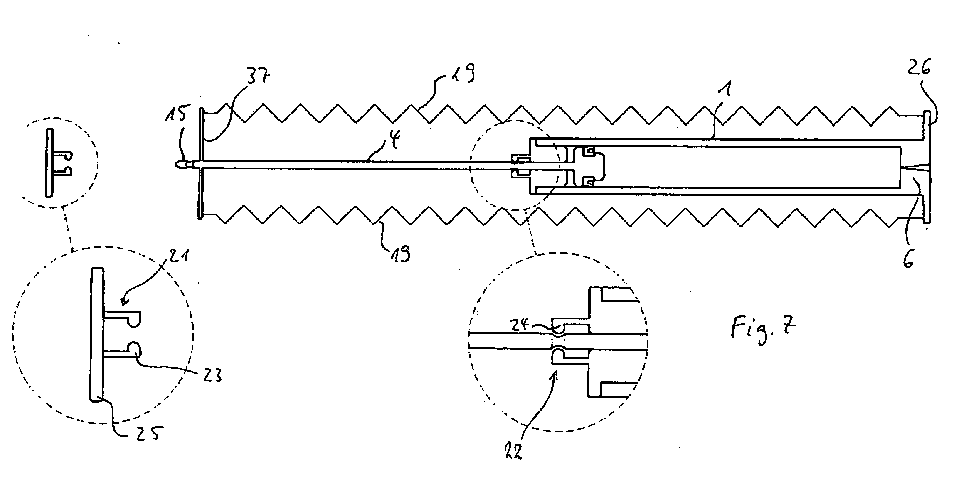

Eine erfindungsgemäße Ausführungsform zeigt Figur 7, die nur insoweit erläutert wird, wie Abweichungen von den Figuren 5 und 6 bestehen. Man erkennt deutlich, dass die Rastmechanismen, d. h. konkret Gegenstücke 21 bzw. 22, ohne Schraubenfedem und Kugeln aufgebaut sind und stattdessen klammerartige Hebelelemente 23 bzw. 24 aufweisen. Es handelt sich hier um einstückig mit den umgebenden Strukturen spritzgegossene Teile, also im Fall des Gegenstücks 22 um einstückig an die dort vorgesehene Montageplatte 25 zur Montage an einer Wand (in einem Spritzgussschritt oder in getrennten Spritzgussschritten) angespritzte Teile, und im Fall des Gegenstücks 22 um zusammen mit dem in den Figuren 1 und 2 mit 5 bezeichneten Stopfen angespritzte Teile. Bei der Ausführungsform nach den Figuren 5 und 6 kann diese Aussage für die Aufnahmen und Führungen der Kugeln 20 und der Schraubenfedem gelten.

Wie Figur 7 zeigt, haben die Hebel 23 eine klammerartige Eingriffsnase, die hinsichtlich ihrer der Kolbenstange 4 zugewandten Seite in ähnlicher Weise halbkugelig rund wie die Kugeln 20 oder auch beispielsweise halbzylindrisch rund ausgestaltet sein kann.

Die einstückige spritzgusstechnische Herstellung gilt im Übrigen auch für die übrigen in Figur 2 dargestellten Teile jeweils für sich, also neben dem Stopfen 5 für die Kolbenstange 4 mit dem Kolben 3, für die Dichtung 7 des Kolbens 3, für das Pneumatikzylinderrohr 1 und für die Ventileinrichtung 6. Bei den Ausgestaltungen aus den Figuren 5 - 7 umfasst die Kolbenstange 4 dabei auch die dargestellte distale Spitze 15 mit der Verjüngung und eine in unmittelbarer Nachbarschaft dazu proximal vorgesehen Montageplatte 37 für die bereits erwähnten Schraubenfedem 19. Seitens des Pneumatikzylinderrohrs 1 umfasst sie eine zweite Montageplatte 26 für dieselben Schraubenfedem 19.

Zwischen diesen Montageplatten 37 und 26 (die auch die Gestalt seitlicher Hebel aufweisen können) erstrecken sich die Schraubenfedern 19, um den Kolben 3 hinsichtlich der in Figur 4 dargestellten Einwärtsbewegung mit einer Federkraft zu beaufschlagen. Wenn die Kolbenstange 4 umgekehrt ausgezogen wird, und zwar insbesondere durch eine Relativbewegung zwischen dem Gegenstück 16 bzw. 22 und dem übrigen Lineardämpfer, so bewegt sich die Verjüngung 17 auf die Kugeln 20 bzw. Hebel 24 zu und kommt dort zur Einrastung. In dieser Position ist die Kolbenstange 4 gegen die Kräfte der Schraubenfedern 19 gesichert. Eine Fortsetzung der Relativbewegung zwischen Gegenstück 16 bzw. 22 und dem Lineardämpfer löst dann die Verrastung zwischen der Verjüngung im Bereich 15 und dem Gegenstück 16 bzw. 22, sodass die in Figur 5 in der unteren großen Darstellung bzw. die in Figur 7 dargestellte Situation entsteht.

Umgedreht könnte sich das Gegenstück 16 bzw. 21 wieder an die Kolbenstange annähern, eine Verrastung herstellen und dann den Rasteingriff zwischen der Rasteinrichtung 18 bzw. 22 und der Verjüngung im Bereich 17 lösen, sodass die Schraubenfedem 19 auch das Gegenstück 16 und an der Montageplatte 25 befestigte Teile mit Kraft beaufschlagen und in einer durch den Pneumatikdämpfer gedämpften Bewegung ziehen können. Dabei kann natürlich die Montageplatte 25 oder der Lineardämpfer an ortsfesten Teilen befestigt sein; theoretisch können auch beide an beweglichen Teilen befestigt sein; im vorliegenden Zusammenhang geht es ausschließlich um Relativbewegungen.

Die Federbeaufschlagung durch zwei exzentrisch symmetrisch angebrachte Schraubenfedem 19 (oder auch durch eine größere Zahl davon) hat den Vorteil, relativ zu der Zylindersymmetrieachse keine Gesamthebelwirkung herzustellen und damit keine erhöhten Anforderungen an die Querstabilität der gesamten Dämpferkonstruktion zu verursachen. Dies bildet einen maßgeblichen Unterschied zu vorbekannten Konstruktionen mit einer exzentrischen Schraubenfeder. Andererseits ist die Konstruktion viel einfacher und hinsichtlich der Zugänglichkeit des Dämpfers und auch seiner resultierenden Bauhöhe (bei danebenliegenden Schraubenfedem 19) oder Baubreite (bei darüber- und darunterliegenden Schraubenfedern 19) günstiger.

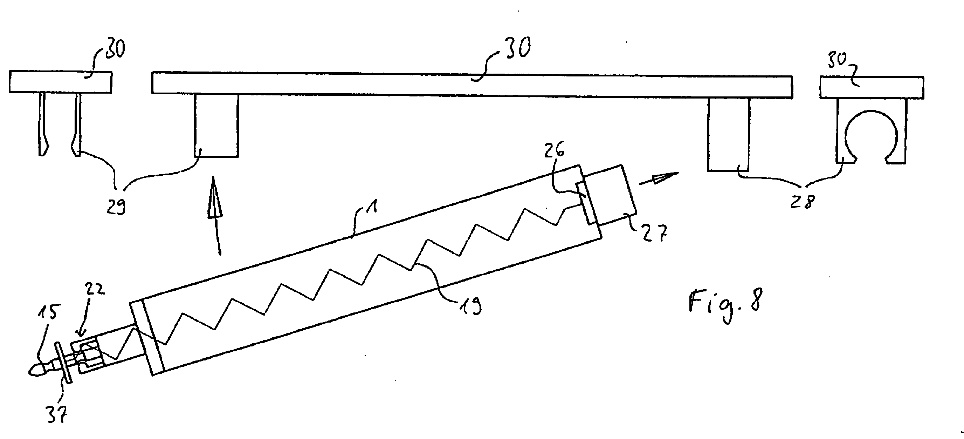

Figur 8 zeigt einen Figur 7 entsprechenden Dämpfer in um 90° um die Längsachse gedrehtem Zustand, wobei an dem in den Figuren 7 und 8 rechten Ende ein Montagefortsatz 27 vorgesehen ist, der eine einfache Zylinderform hat. Es könnte sich hierbei auch um ein Zylinderteil mit der Ventileinrichtung 6 handeln. Man erkennt, dass der Lineardämpfer eine auch unter Berücksichtigung der in dieser Perspektive flachen Bauform der Montageplatten 37 und 26 geringe Bauhöhe hat. Er kann erfindungsgemäß mit der Montagenase 27 in eine Hohlaufnahme 28 in etwas geschlossener U-Form schräg eingesteckt werden, die in Figur 8 rechts noch einmal in achsenparalleler Perspektive dargestellt ist. Dann kann der andere Teil des Dämpfers in eine etwas weniger geschlossene U-Rastaufnahme 29 eingeschnappt werden, die in Figur 8 links ebenfalls in achsenparalleler Perspektive dargestellt ist. In dieser Form wird der Dämpfer sehr einfach und reversibel an einer Gesamtmontageplatte 30 befestigt, die beispielsweise an einer Schiebetür oder Wand festgeklebt oder - geschraubt sein kann. In gleicherweise kann die Montageplatte 25 aus den Figuren 5 - 7 an einer Wand oder Schiebetür oder einem anderen Element festgeklebt oder - geschraubt sein, wobei aufgrund der bei diesem Ausführungsbeispiel gegebenen Rotationssymmetrie des dortigen Rastmechanismus nicht auf die Orientierung hinsichtlich der Winkel einer Rotation um die Zylindersymmetrieachse geachtet werden muss. Andererseits ist der Rastmechanismus 22 verdrehsichemd ausgestaltet und sorgt daher für eine wenigstens ungefähre Parallelität der Erstreckung der Schraubenfedem 19 und des Pneumatikzylinderrohres 1.

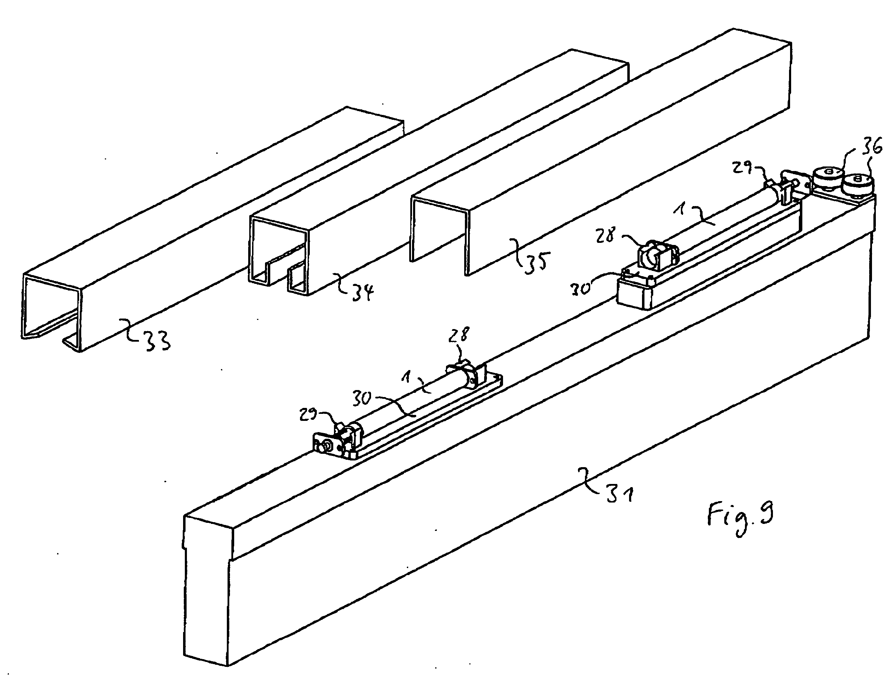

Figur 9 zeigt einige Illustrationen zum Einsatz an der Oberkante einer Schiebetür 31. Dabei ist der Dämpfer nach Figur 7 (unter Weglassung der Schraubenfedern 19) zweimal gezeigt, und zwar auf einer niedrigen Montageplatte 30 aus Figur 8 und einer mit einem Block 32 erhöhten Montageplatte 30 dahinter.

Beispielsweise können innerhalb des Dämpfers, also etwa rechts hinter dem Dämpfer links vorn, nicht gezeichnete konventionelle Rollen, die die Schiebetür 31 nicht nur seitlich stützen, sondern auch vertikal tragen, vorgesehen sein. Sie können beispielsweise in einem Schienenprofil 33 mit etwas nach innen gewinkelten Laufflächen (zur Zentrierung) oder bei radial angepasster Rollengröße auch in der rechts daneben dargestellten Schiene 34 laufen. In der Schiene 34 laufen die Rollen auf dem Boden der jeweils für sich genommen (aufrecht) U-förmigen unteren Schenkelenden des insgesamt (umgekehrt) U-förmigen Schienenprofils. Auch dadurch ist eine seitliche Führung möglich.

Die höher montierte Variante rechts hinten passt beispielsweise zu den rechts dahinter dargestellten flach und damit tiefer montierten Rollen 36, die nur zum seitlichen Halten, aber nicht zur Aufnahme der vertikalen Schwerkraft, der Schiebetür 31 vorgesehen sind. Diese passen zu dem mit 35 bezifferten Schienenprofil. In diesem Fall würde die Schiebetür 31 auf unter ihr montierten Rollen im Bodenbereich laufen. Eine seitliche Führung ist auch mit Gleitflächen statt Rollen möglich.

Alle Schienenprofile decken den Dämpfer und die Rollen in besonders günstiger Weise gegen Blicke von der Seite und z. T. auch von unten ab, wobei der Dämpfer und die Rollen zwischen den Schienenschenkeln und zwischen der Schienenbasis und der Schiebetür 31 untergebracht sind.

Die bereits erwähnten Montageplatten 25 können beispielsweise innerhalb der Schienen fest angebracht werden. Die Dämpfer können auch außerhalb der Rollen angebracht und mit Montageplatten außerhalb der Schienen beispielsweise an gegenüberliegenden Türholmen oder Wänden befestigt sein.

Ergänzend wird zur Illustration der Funktionsweise des Lineardämpfers und seines Einsatzes verwiesen auf die veröffentlichten Anmeldungen EP 04 106 110.2 und WO 20061056606 desselben Anmelders. Dabei gilt insgesamt, dass je nach Interesse im Einzelfall Endphasen der Bewegung an einem von zwei oder auch an beiden Anschlägen einer Tür oder eines anderen beweglichen Elements gedämpft werden können. Im Übrigen wird ergänzend darauf verwiesen, dass der Montagefortsatz 27 in Figur 8 eine Einstellvorrichtung enthalten könnte, wie sie in der zitierten WO-Schrift in Figur 9 und 10 dargestellt und darauf Bezug nehmend in der Beschreibung erläutert ist. Eine Wiederholung dieser Darstelllung erscheint hier überflüssig.

## Patentansprüche

1. Druckfluiddämpfer zum mechanischen Dämpfen von Bewegungen von Vorrichtungsteilen mit
einer Druckfluidkammer (2, 30) und
einer Drosselöffnung (6), die mit der Kammer (2, 30) kommuniziert,
einem Kolben (3) als bewegliche Wand der Kammer (2, 30) und
einer Kolbenstange (4) an dem Kolben (3) zur Betätigung des Kolbens (3) zwischen einer eingefahrenen Position und einer ausgefahrenen Position, in denen die Kammer (2, 30) jeweils unterschiedliche Kammervolumina hat, einem Rastmechanismus (17, 22, 24) zur Festlegung der Kolbenstange (4) in einer ausgefahrenen Position,
wobei der Rastmechanismus (17, 22, 24) über einen durch relativ zu der Kolbenstange (4) radial wirkende Kräfte erzeugten Formschluss funktioniert, welcher Formschluss zum Einfahren der Kolbenstange (4) in die eingefahrene Position gelöst werden muss,
**dadurch gekennzeichnet, dass** der Formschluss unter Beteiligung eines relativ zu der Kammer axial festen Spritzgussteils (22, 24) und eines davon zu umgreifenden formangepassten Abschnitts (17) der Kolbenstange (4) erfolgt.

2. Dämpfer nach Anspruch 1, bei dem der Formschluss an einem In ausgefahrener Position der Kolbenstange (4) zu der Druckfluidkammer (2, 30) proximalen Bereich (17) der Kolbenstange vorgesehen ist.

3. Dämpfer nach Anspruch 1 oder 2, bei dem der Formschluss aus einer relativ zu der Kolbenstange (4) radialen elastischen Kraft folgt, die durch eine relativ zu der Kolbenstange (4) schräge Fläche des Formschlusses so in eine relativ zu der Kolbenstange (4) axiale Haltekraft übersetzt wird, dass der Formschluss infolge der Schräge durch eine rein axiale Mindestkraft an der Kolbenstange (4) überwunden werden kann.

4. Dämpfer nach einem der vorstehenden Ansprüche, bei dem das Spritzgussteil (22, 24) an einem von der Kolbenstange (4) durchsetzten Stopfen (5) angespritzt ist und der formangepasste Abschnitt (17) der Kolbenstange (4) eine Verjüngung der Kolbenstange (4) ist.

5. Dämpfer nach einem der vorstehenden Ansprüche, bei dem der Formschluss durch ein Profil der Kolbenstange (4) querzu ihrer axialen Richtung verdrehsichernd wirkt.

6. Dämpfer nach einem der vorstehenden Ansprüche mit einer zu dem Dämpfer parallelwirkenden Federeinrichtung (19), die relativ zu der axialen Richtung der Kolbenstange (4) rotationssymmetrisch angeordnet ist.

7. Dämpfer nach einem der vorstehenden Ansprüche mit einer zu dem Dämpfer parallelwirkenden Federeinrichtung (19), die relativ zu der axialen Richtung der Kolbenstange (4) exzentrisch angeordnet ist, insbesondere zwei exzentrische und relativ zu der axialen Richtung der Kolbenstange (4) symmetrisch angeordnete Federn (19) aufweist.

8. Dämpfer nach einem der vorstehenden Ansprüche mit einer Halteplatte (30) zur Befestigung des Dämpfers an einem Vorrichtungsteil (31), wobei zwischen dem Dämpfer und der Halteplatte (30) eine Rastmontage (28, 29) vorgesehen ist.

9. Dämpfer nach Anspruch 8, bei der die Rastmontage (28, 29) durch Herstellung eines Formschlusses an einem Ende (27) des Dämpfers und Einschnappen eines anderen Teils des Dämpfers, insbesondere in eine U-Aufnahme (29), erfolgt.

10. Dämpfer nach einem der vorstehenden Ansprüche mit einem Gegenstück (16, 21, 25) für ein relativ zu der Kammer distales Kolbenstangenende (15), wobei zwischen dem Gegenstück (16, 21, 25) und dem Kolbenstangenende (15) ein Rastmechanismus (16, 21) vorgesehen ist.

11. Dämpfer nach Anspruch 10, bei dem der Formschluss zwischen dem Gegenstück (16, 21, 25) und dem distalen Kolbenstangenende (15) aus einer relativ zu der Kolbenstange (4) radialen elastischen Kraft folgt, die durch eine relativ zu der Kolbenstange (4) schräge Fläche des Formschlusses so in eine relativ zu der Kolbenstange (4) axiale Haltekraft übersetzt wird, dass der Formschluss infolge der Schräge durch eine rein axiale Mindestkraft an der Kolbenstange (4) überwunden werden kann.

12. Dämpfer nach Anspruch 10 oder 11, bei dem der Formschluss zwischen dem Gegenstück (16, 21, 25) und dem distalen Kolbenstangenende (15) unter Beteiligung eines Spritzgussteils (21, 23) und eines davon zu umgreifenden formangepassten Abschnitts (15) der Kolbenstange (4) erfolgt.

13. Dämpfer nach einem der vorstehenden Ansprüche als pneumatischer Dämpfer mit einer Ventileinrichtung (6) mit einem elastisch aufgehängten Ventilteil (11), welches die Drosselöffnung begrenzt und die Drosselöffnung mit zunehmendem Druck zwischen den Seiten der Ventileinrichtung (6) vergrößert, insbesondere mit einer einstückig mit dem Ventilteil (11) ausgeführten elastischen Elastomeraufhängung (12) des Ventilteils (11) in der Ventileinrichtung (6).

14. Schiebetürsystem mit einem Schiebetürelement (31), das in einer Schieberichtung verschoben werden kann und eine schieberichtungsparallele Seitenkante aufweist,
einer Schiene (33 - 35) zum Halten des Schiebetürelements (31), die zumindest einen Raum oberhalb der Seitenkante mit einem Schienenschenkel umfasst und **dadurch** zumindest in einer zu dem Schiebetürelement (31) senkrechten Blickrichtung abdeckt und gegenüber der das Schiebetürelement (31) verschoben werden kann,
und einem Dämpfer nach einem der vorstehenden Ansprüche zum Abdämpfen zumindest eines Teils von Verschiebebewegungen des Schiebetürelements (31) gegenüber der Schiene (33 - 35), der einerseits an der Schiene (33 - 35) und andererseits an dem Schiebetürelement (31) angebracht ist, wobei der Dämpfer so innerhalb der Schiene (33 - 35) angebracht ist, dass er durch die Schiene (33 - 35) in der auf dem Schiebetürelement (31) senkrechten Blickrichtung abgedeckt ist.

15. Verwendung eines Dämpfers nach einem der Ansprüche 1 - 13 für eine Schiebetür (31), insbesondere ein Schiebetürsystem nach Anspruch 14.

## Claims

1. A pressure fluid damper for mechanically damping movements of device elements comprising
a pressure fluid chamber (2,30) and
a throttle orifice (6) that connects with said chamber (2,30),
a piston (3) as a moving wall of said chamber (2, 30) and
a piston rod (4) at said piston (3) to actuate said piston (3) between an inserted position and an extended position, in which said chamber (2, 30) has a respectively different chamber volume.
a snap locking mechanism (17, 22, 24) to lock said piston rod (4) in an extended position,
wherein said snap locking mechanism (17, 22, 24) functions by means of a form closure produced by forces acting radially relative to said piston rod (4), which form closure must be released for insertion of said piston rod (4) into said inserted position,
**characterised in that** said form closure occurs with the participation of an injection-moulded element (22, 24) which is affixed axially relative to said chamber and by means of a matched-shaped portion (17) of said piston rod (4) to be encompassed by said injection moulded part (22, 24).

2. The damper according to claim 1 in which said form closure is located in a region (17) of said piston rod proximal relative to said pressure fluid chamber (2, 30) when said piston rod (4) is in said extended position.

3. The damper according to claim 1 or 2 in which said form closure occurs through an elastic force radial relative to said piston rod (4), said force being converted by means of a surface of said form closure that is slanted relative to said piston rod (4), into a holding force axial relative to said piston rod (4), in such a manner that said form closure, as a consequence of said slanted surface, can be surmounted by a purely axial minimum force on said piston rod (4).

4. The damper according to one of the preceding claims in which said injection-moulded part (22, 24) is moulded onto a plug (5) penetrated by said piston rod (4), and said matched-shaped portion (17) of said piston rod (4) is a diminished portion of said piston rod (4).

5. The damper according to one of the preceding claims in which said form closure acts as an anti-turn mechanism by means of a profile of said piston rod (4) in a sense transverse to the axial direction thereof.

6. The damper according to one of the preceding claims with a spring element (19) acting parallel to said damper, said spring element being arranged rotation-symmetrical relative to the axial direction of said piston rod (4).

7. The damper according to one of the preceding claims with a spring element (19) acting parallel to said damper, said spring element being arranged off-center relative to the axial direction of said piston rod (4), and having in particular two off-center springs (19) arranged symmetrically relative to the axial direction of said piston rod (4).

8. The damper according to one of the preceding claims with a support plate (30) for affixing said damper to a device element (31), wherein a snap locking mechanism (28, 29) is provided between said damper element and said support plate (30).

9. The damper according to claim 8 in which said snap locking mechanism (28, 29) occurs through creation of a form closure at one end (27) of said damper, and snapping into place of another part of said damper, notably in a U-recess (29).

10. The damper with a counterpart piece (16, 21, 25) for a distal piston rod end (15) relative to said chamber, wherein a snap locking mechanism (16, 21) is provided between said counterpart piece (16, 21, 25) and said piston rod end (15).

11. The damper according to claim 10 in which said form closure between said counterpart piece (16, 21, 25) and said distal piston rod end (15) results from a force radial relative to said piston rod (4), said force being converted by means of a surface of said form closure slanted relative to said piston rod (4) into an axial holding force relative to said piston rod (4), in such a manner that said form closure, as a result of the slant, can be overcome by a purely minimum force axial to said piston rod (4).

12. The damper according to claims 10 or 11 in which said form closure between said counterpart piece (16, 21, 25) and said distal piston rod end (15) occurs through an injection-moulded part (21, 23) and a matched-shape portion (15) of said piston rod (4) to be encompassed by said injection moulded part.

13. The damper according to one of the preceding claims as a pneumatic damper with a valve means (6) with an elastically suspended valve element (11), which restricts said throttle orifice and enlarges said throttle orifice with increasing pressure between the sides of said valve means (6), in particular having an elastic elastomer suspension (12) of said valve element (11) in said valve means (6), said suspension being formed integrally with said valve element (11).

14. A sliding door system comprising a sliding door element (31), which can be slid in a sliding direction and features a side edge parallel to the sliding direction,
a rail (33-35) for holding said sliding door element (31), embracing at least a space above said side edge by a rail leg, thereby covering said space in at least one viewing direction perpendicular to of said sliding door element (31) and wherein said sliding door element (31) can be displaced relative thereto,
and a damper according to one of the preceding claims to dampen at least a portion of the sliding movement of said sliding door element (31) with respect to said rail (33-35), which, on the one hand, is attached to said rail (33-35) and on the other hand, to said sliding door element (31),
wherein said damper is mounted within said rail (33-35) in such a manner that it is covered by said rail (33-35) in said viewing direction perpendicular to said sliding door element (31).

15. A use of a damper according to one of claims 1 - 13 for a sliding door (31), particularly a sliding door system according to claim 14.

## Revendications

1. Amortisseur à fluide sous pression permettant d'amortir mécaniquement les mouvements de parties de dispositifs, comprenant une chambre de fluide sous pression (2, 30) et
un orifice d'étranglement(6) qui communique avec la chambre (2, 30),
un piston (3) servant de paroi mobile de la chambre (2, 30) et
une tige-piston (4) au niveau du piston (3) pour actionner le piston (3) entre une position rentrée et une position sortie, dans lesquelles positions la chambre (2, 30) présente à chaque fois des volumes de chambre différents, un mécanisme d'encliquetage (17, 22, 24) pour fixer la tige-piston (4) en une position sortie,
le mécanisme d'encliquetage (17, 22, 24) reposant dans son fonctionnement sur un procédé d'accouplement mécanique produit par des forces agissant radialement par rapport à la tige-piston (4), lequel procédé d'accouplement mécanique doit être relâché pour rentrer la tige-piston (4) en position rentrée,
**caractérisé en ce que** le procédé d'accouplement mécanique se fait sous l'action d'une pièce (22, 24) moulée par injection fixée axialement par rapport à la chambre et d'une section (17) de la tige-piston (4) adaptée à cet accouplement mécanique et à être enveloppée par cette pièce (22, 24) moulée par injection.

2. Amortisseur selon la revendication 1, dans lequel le procédé d'accouplement mécanique est prévu à un domaine proximal (17) par rapport à la chambre de fluide de pression (2, 30) en une position sortie de tige-piston (4).

3. Amortisseur selon la revendication 1 ou 2, dans lequel le procédé d'accouplement mécanique vient d'une force élastique radiale par rapport à la tige-piston (4), laquelle se traduit, via une surface oblique d'accouplement mécanique par rapport à la tige-piston (4), en une force de maintien axiale par rapport à la tige-piston (4) de telle sorte que l'accouplement mécanique puisse être débloqué, en raison de la surface oblique, par une force minimale purement axiale exercée à la tige-piston (4).

4. Amortisseur selon l'une quelconque des revendications précédentes, dans lequel la pièce (22, 24) moulée par injection est moulée à un bouchon (5) entrecoupé par la tige-piston (4) et la section (17) adaptée a l'accouplement mécanique de la tige-piston (4) est un rétrécissement de la tige-piston (4).

5. Amortisseur selon l'une quelconque des revendications précédentes, dans lequel l'accouplement mécanique agit de manière sécurisée contre la torsion grâce à un profil de la tige-piston (4) transversale par rapport à sa direction axiale.

6. Amortisseur selon l'une quelconque des revendications précédentes comprenant un dispositif à ressort (19) ayant une action parallèle à l'amortisseur, lequel dispositif est agencé de manière rotationnellement symétrique par rapport à la direction axiale de la tige-piston (4).

7. Amortisseur selon l'une quelconque des revendications précédentes comprenant un dispositif à ressort (19) ayant une action parallèle à l'amortisseur, lequel dispositif est agencé de manière excentrique par rapport à la direction axiale de la tige-piston (4), notamment comprenant deux ressorts (19) excentriques et agencés symétriquement par rapport à la direction axiale de la tige-piston (4).

8. Amortisseur selon l'une quelconque des revendications précédentes comprenant une plaque de maintien (30) permettant de fixer l'amortisseur à un partie (31) du dispositif, un montage par encliquetage (28, 29) étant prévu entre l'amortisseur et la plaque de maintien (30).

9. Amortisseur selon la revendication 8, dans lequel le montage par encliquetage (28, 29) passe par le procédé d'accouplement mécanique à une extrémité (27) de l'amortisseur et le blocage par encliquetage d'une autre pièce de l'amortisseur, notamment dans une fixation en U (29).

10. Amortisseur selon l'une quelconque des revendications précédentes comprenant une contrepartie (16, 21, 25) pour une extrémité distale (15) de la tige-piston par rapport à la chambre, un mécanisme d'encliquetage (16, 21) étant prévu entre la contrepartie (16, 21, 25) et l'extrémité (15) de la tige-piston.

11. Amortisseur selon la revendication 10, dans lequel le procédé d'accouplement mécanique entre la contrepartie (16, 21, 25) et l'extrémité distale (15) de la tige-piston vient d'une force élastique radiale par rapport à la tige-piston (4), laquelle se transforme, via une surface oblique d'accouplement mécanique par rapport à la tige-piston (4), en une force de maintien axiale par rapport à la tige-piston (4) de telle sorte que l'accouplement mécanique puisse être débloqué, en raison de la surface oblique, par une force minimale purement axiale exercée à la tige-piston (4).

12. Amortisseur selon la revendication 10 ou 11, dans lequel l'accouplement mécanique entre la contrepartie (16, 21, 25) et l'extrémité distale (15) de la tige-piston se fait sous l'action d'une pièce (21, 23) moulée par injection et d'une section (15) de la tige-piston (4) adaptée à cet accouplement mécanique et à être enveloppée par cette pièce (21, 23) moulée par injection.

13. Amortisseur selon l'une quelconque des revendications précédentes étant une amortisseur pneumatique comprenant un dispositif de soupapes (6) avec un élément de soupape (11) suspendu élastiquement qui limite l'orifice de régulation et qui agrandit ledit orifice sous l'effet d'une pression croissante entre les côtés du dispositif de soupapes (6), notamment à l'aide d'une suspension élastomère élastique (12) de l'élément de soupape (11) réalisée en une seule pièce avec un élément de soupape (11) au sein du dispositif de soupapes (6).

14. Système de porte coulissante comprenant un élément de porte coulissante (31) qui peut être coulissé dans une direction de coulissement et qui présente une bordure latérale parallèle à la direction de coulissement,
un rail (33-35) pour maintenir l'élément de porte coulissante (31) qui englobe au moins un espace au-dessus de la bordure latérale avec une branche de rail et qui le couvre par conséquent au moins dans la direction du regard verticale par rapport à l'élément de porte coulissante (31) et dans le sens duquel rail l'élément de porte coulissante (31) peut être coulissé.
et un amortisseur selon l'une quelconque des revendications précédentes permettant d'amortir au moins une pièce des mouvements de coulissement de l'élément de porte coulissante (31) par rapport au rail (33-35), qui est fixé d'une part au rail (33-35) et d'autre part à l'élément de porte coulissante (31), l'amortisseur étant fixé à l'intérieur du rail (33-35) de sorte à être recouvert par le rail (33-35) dans la direction du regard tombant à la verticale sur l'élément de porte coulissante (31).

15. Utilisation d'un amortisseur selon l'une des revendications 1 à 13 pour une porte coulissante (31), notamment un système de porte coulissante selon la revendication 14.
